# EUROPEAN PATENT SPECIFICATION

(11) **EP 2 361 759 B1**
(45) Date of publication and mention of the grant of the patent: **26.09.2012**
(21) Application number: 10425223.4
(22) Date of filing: 01.07.2010
(51) Int. Cl.: B32B 5/18, B32B 27/08, B32B 27/30, B32B 27/32, B65B 31/00, B65D 1/34, B65D 81/38

(54) **Sheet of plastic material, tray for a food product obtained from said sheet, packaging comprising said tray and related manufacture method**
Blatt aus Kunststoffmaterial, Schale für ein Lebensmittelprodukt aus dem besagten Blatt Verpackung mit besagter Schale und zugehöriges Herstellungsverfahren
Feuille de matériau plastique, plateau pour produit alimentaire obtenu à partir de ladite feuille, conditionnement comprenant ledit plateau et procédé de fabrication correspondant

(43) Date of publication of application: 31.08.2011
(73) Proprietor: COOPBOX Eastern S.r.o., Nové Mesto nad Váhom (SK)
(72) Inventor: De Angelis, Silvia, 42100 Reggio Emilia (IT); Fiordelisi, Fabio, 42100 Reggio Emilia (IT); Fornaciari, Claudio, 42100 Reggio Emilia (IT)
(74) Representative: Sabbiuni, Renzo

(56) References cited:
- EP-A1- 1 798 160
- EP-A2- 1 997 618
- US-A- 5 362 436

## Description

The present invention refers in general to the field of plastic materials for the food packaging industry.

In detail, the invention regards a sheet of plastic material, a tray for containing a food product obtained from such a sheet of plastic material, a package comprising one such tray, in particular for packaging food in a protective or modified atmosphere and a method for their manufacturing.

It is known that the food packaging field is particularly mindful of consumer needs, and therefore there are numerous new packages which constantly arrive on the market.

For solid foods such as meat, fish, cheese and vegetables but also for bakery, gastronomy and confectionary products, packages are quite widespread which comprise a tray or small dish made of expanded polystyrene.

In particular, trays are employed essentially constituted by a single expanded polystyrene layer which act as simple support containers for the packaged food, or trays are employed having an open cell structure, such cells among other things also allowing the absorption of the liquids released by the food, particularly from meat and fish.

In packages of this type, the closure is generally obtained by means of winding an extensible plastic film around the tray containing the food product.

In such cases, the shelf-life of the package, i.e. the shelf-life of the food thus packaged, is limited to a few days, generally from two to four days.

Then there are packages sealed in a protective or modified atmosphere which extend the preservation times of the contained food.

One such type of packaging essentially comprises a tray constituted by a layer of expanded polystyrene generally internally coated with a first plastic film having barrier properties with respect to gas or vapors, which in turn is sealed along a peripheral band to a second plastic film with barrier properties, in a manner so as to trap a predetermined gas or mixture of gases inside the package, between the two plastic films.

One particular feature of the trays with barrier properties consists of having the side walls with very little slope (nearly vertical) for increasing their capacity and thus their inner volume.

One such solution is made necessary since the contents of the package, i.e. the food product arranged in the tray, cannot project beyond the upper perimeter edge of the tray itself on which the plastic closure film is sealed, as instead normally occurs in packages comprising trays closed via wrapping with extendible film.

In any case, for all of the above-considered cases, such trays are fairly standardized by comprising an expanded portion with very low density, generally in the interval between 30 and 50 grams/liter and in any case not greater than 60 grams/liter, and thicknesses of the walls between 3.5 and 6 millimeters which are capable of ensuring good tray rigidity with the use of small amounts of plastic material.

Such trays, as is known, are obtained by the thermoforming of a sheet consisting of an expanded polystyrene layer coupled with a plastic film having barrier properties, in which the polystyrene layer (expanded portion) has a density between 40 and 80 grams/liter.

Where trays of expanded plastic material are not employed, prior art has also provided packaging with protective or modified atmosphere, comprising trays essentially composed of polypropylene, polyethylenterephthalate, shock-resistant polystyrene or other non-expanded resins that allow making transparent, opaque or colored products.

Although these are advantageous and satisfy requirements, trays of the type described above are not free from drawbacks, which are specifically related to the characteristics that mainly determine their advantages.

In particular, packaging comprising trays made of expanded polystyrene ensure a certain thermal insulation, useful during transport, for example, from the point of purchase of the package to one's home.

In addition, such trays are made with a limited amount of plastic material, which is less than the amount needed for non-expanded plastic trays for the same tray capacity (contents), which in addition to a lower cost per unit also has a smaller environmental impact and generally a lower use of resources.

On the other hand, due to the fact that these trays are made of expanded plastic material, they are particularly bulky, with consequent negative impact on storage and transport.

In the case of trays intended for protective or modified atmosphere packaging, the bulk in the storage, stacking and transport of the trays is even greater due to the lesser slope of the walls as previously described.

In addition, packaging with protective or modified atmosphere is generally packaged, i.e. completed, in industrial plants rather than at large-scale retail sales points where the package may be purchased. Hence, easy unstacking of the trays employed on automatic systems is often desired, but trays made of expanded plastic material as described by the prior art are not capable of ensuring this.

Such a type of tray has rather thick walls and, also due to a certain non-uniformity in the wall thickness, when stacked together they are arranged in a rather disordered manner, making the automatic unstacking rather difficult in the package manufacturing process.

With regard to packaging with protective or modified atmosphere comprising trays made without expanded plastic material, it should be said that these are less voluminous than the preceding and therefore have lower bulk, with consequent advantages in the storage and transport.

In addition, such trays are generally rather ordered when arranged in vertical stacks and therefore they do not present particular difficulties in unstacking on industrial production lines of food packages.

Nevertheless, trays of this type suffer the drawback that in order to obtain a rigidity sufficient for its use, and in any case decidedly less than that of the trays constituted by expanded plastic material, a plastic material amount is used that ranges from 30% up to 100%, with consequent increase in cost, greater environmental impact and generally with increased use of resources.

In addition, trays of this type do not ensure even minimal thermal insulation of the product contained therein; such insulation is instead often desired by the consumer, as considered above.

Therefore, it would desirable to provide a tray which possesses the positive characteristics of the known trays made of expanded plastic material and the positive characteristics of the known trays made of non-expanded plastic material, which at the same time overcomes the drawbacks and disadvantages mentioned above.

According to a first known solution, the plastic material sheet of which the tray is made is formed by a first layer of expanded extruded polystyrene and a second layer of high impact polystyrene, also known as HIPS, and by a plastic film, wherein the expanded extruded polystyrene layer has a density between 60 and 90 grams/liter and the final sheet has a thickness greater than 2.5 mm.

This first solution has several drawbacks. In particular, the trays made in accordance with this first solution have a relatively high thickness, as well as a non-uniformity of the thickness along the walls with consequent high bulk and difficult stacking properties.

In accordance with a second known solution, described in EP-A-1997618 of the same applicant, the sheet is made with a layer of expanded extruded polystyrene with a density between 150 and 350 grams/liter. Nevertheless, also in this case, such a solution has the drawback of not allowing the production of trays with thickness less than or equal to 1.5 mm. In addition, these trays have a relatively low structural rigidity, also due to the impossibility of creating reinforcement ribs; as it is also difficult to make possible projecting teeth which would allow easier stacking/unstacking.

A first object of the present invention is that of providing a tray for a food product, in particular for packaging with protective or modified atmosphere, equipped with high structural rigidity and size stability, which also allows a precise forming even of small details, comprising the overturned edge.

A second object of the present invention is that of providing a tray of the aforesaid type that has a reduced and uniform thickness along all the walls, together with a low overall volumetric density, so that it has a reduced weight and thus a reduced production cost, a reduced environmental impact and which is capable of ensuring a certain thermal insulation.

A third object of the present invention is that of providing a tray of the aforesaid type which can be made with conventional systems and with high productivity with respect to trays of equivalent weight described in the prior art.

A further object of the present invention is to provide packaging with protective or modified atmosphere for a food product comprising a tray of the above-considered type.

These and further objects are attained by means of a sheet of multilayer plastic material in accordance with claim 1.

The dependent claims outline preferred and particularly advantageous embodiments of the sheet according to the invention.

In detail, according to the present invention, a sheet of plastic material is provided according to claim 1, along with a tray for containing a food product obtained via thermoforming from such plastic material sheet, packaging with protective or modified atmosphere for a food product comprising one such tray and a related manufacturing method for such trays.

Further characteristics and advantages of this invention will be clearer from the description of several preferred embodiments of a plastic material sheet, of a tray for the containment of a food product obtained from such sheet and of packaging with protective or modified atmosphere for a food product comprising one such tray, made herebelow with reference to the attached drawings which are provided as illustrating and non-limiting examples.

In these drawings:
- Figure 1 shows a cross section view of a tray according to the present invention;
- Figure 2 shows an enlargement, not to scale, which illustrates the layers of a plastic material sheet in accordance with the invention with which the tray of figure 1 is achieved;
- Figure 3 shows a cross section view of two stacked trays.

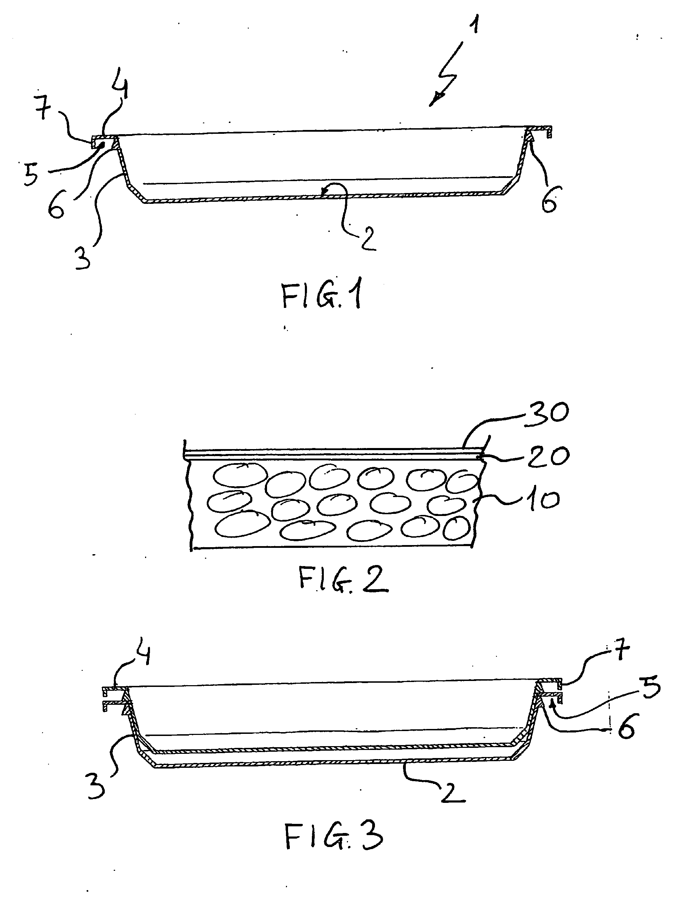

With reference to figure 1, a tray for a food product in accordance with the present invention is indicated in its entirety with 1.

The tray 1 is of tub type and essentially comprises a bottom 2 and side walls indicated with 3 having a raised perimeter edge 4.

The tray 1 is essentially composed of a first layer of expanded extruded polystyrene, indicated with 10 in figure 2, a second layer of high impact polystyrene having shock-resistant properties, indicated with 20 in figure 2, and by a third layer constituted by a flexible plastic film having barrier properties with respect to gas or vapors, indicated with 30 in figure 2, which is directly coupled to the aforesaid second high impact polystyrene layer on the side which will come to occupy the inner surface of the tray.

The high impact polystyrene commonly defined as HIPS in the present invention is a styrene-butadiene copolymer having viscosity, indicated in terms of melt flow index comprised between 3.5 and 6.5 g/10 minutes (ISO 1133 method, at 200°C, with sample weight of 5 kg).

This layer is directly coupled to the expanded polystyrene layer via extrusion coating in calender, as will be better described below. Such a layer of HIPS polystyrene ensures a perfect coupling between the expanded part and the barrier film, conferring greater mechanical strength.

The plastic film is for example composed of a multilayer plastic film in which at least one of the layers is composed of EVOH (ethylvinyl alcohol) or PVDC (polyvinylidene chloride) or other polymers or mixture of polymers with low permeability to gases or vapors, where the barrier layer has a thickness comprised between 2 and 12 microns for a multilayer film having overall thickness comprised between 20 and 60 microns.

Therefore, the tray 1 is particularly suitable for the packaging of a food in protective or modified atmosphere, as will become clearer below.

Such a tray 1 is obtained via the thermoforming of a sheet made via extrusion and coupling in a calender of the aforesaid first and second layers with the aforesaid plastic film.

In accordance with the present invention, the first expanded extruded polystyrene layer has a density comprised between 120 and 160 grams/liter, preferably between 140 and 150 grams/liter and a thickness at least equal to 85% of the overall thickness of the sheet. As an example, for a sheet having overall thickness of about 1.5 mm, the first layer of expanded polystyrene occupies a portion of such thickness equal to about 1.3 mm.

As we shall see below, such values and such ratios detectable on the sheet remain nearly unchanged when the tray is formed. In practice, the thermoforming is achieved with a calibrated mold, substantially keeping the value of the sheet thickness unchanged.

The thermoforming of said sheet of plastic material is obtained by employing the normal molding means which are used for forming conventional rigid plastic trays, such as the trays made exclusively of PET or PP.

In substance, the tray is molded into the desired form by applying the sheet to a mold with an embossing punch operating on the surface side of the sheet which will be located as the inner part of the finalized tray.

In this manner, the molding times of the trays according to the present invention will be shorter than those obtainable with the molding techniques employed for the trays made of expanded polystyrene material of the prior art, since the fastest molding method is employed that is typical for trays made of rigid plastic, e.g. PET.

The coupling between said first layer and said second layer and the film occurs in a single passage, by making the sheet pass through a pair of thermostated rollers of a calender, after the second shock-resistant layer is first cast onto the first layer (this second layer exiting from a flat head die) and immediately onto this second layer the third layer constituted by the plastic film is cast (unrolled from a roller placed downstream of the flat head die).

In other words, the sheet is obtained via extrusion and coupling in a single passage according to conventional techniques well known in the art and, therefore not described in greater detail herein.

With regard to the achievement of the first expanded polystyrene layer of the sheet, this is obtained according to the invention as follows.

First, a polystyrene-based mixture is prepared which is fed to an extruder, which can be of various kinds, i.e. single mono-screw, single twin-screw, single-screw tandem or primary twin-screw tandem with secondary mono-screw.

The polystyrene-based mixture is plasticized and made uniform inside the extruder via heating; then, when the mixture is well-plasticized, a blowing agent of known type is inserted in the extruder. This agent can be butane, for example, in an amount comprised between 1.5 and 2.5% and preferably 2% of the mixture total. The mixture is then cooled and extruded.

In particular, according to the invention, a first layer of expanded polystyrene is extruded with a density comprised between 120 and 190 grams/liter, preferably between 140 and 150 grams/liter, and a thickness of less than 1.5 mm.

The extrusion occurs through a die preferably having an outlet opening with a circular rim shape, obtaining the first layer in tubular form which is mounted and made to slide onto the exterior of a cylindrical mandrel. This mandrel has the object of gauging, i.e. giving final size to the extruded tube.

In accordance with a further characteristic of the invention, the stretching ratio, i.e. the ratio between the diameter of the gauge mandrel and the average diameter of the circular rim of the die, is comprised between 3.0 and 3.5 and preferably is about 3.2.

It should be noted that the value of the aforesaid ratio is similar to that generally used in the production of sheets of expanded polystyrene according to the prior art, and allows obtaining a layer of expanded extruded polystyrene having a structure with cells that are closed, slightly oriented in a transverse direction.

The mandrel is cooled in a manner so as to consolidate the first tubular layer in expanded polystyrene, which is then cut along one or more generatrices to form a flat sheet layer of expanded extruded polystyrene on which the aforesaid second layer of shock-resistant polystyrene is coupled, and on the latter the plastic film with barrier properties is coupled.

Thus, the plastic material sheet is obtained comprising the first expanded extruded polystyrene layer coupled to the second shock-resistant polystyrene layer and to the plastic film with barrier properties; the sheet is then wound in coils that are subsequently sent to thermoforming for obtaining the trays that will eventually be used for making packages sealed in protective or modified atmosphere in accordance with the present invention.

In particular, the sheet of multilayer plastic material, according to the present invention, is thermoformed in the same manner as the trays made of rigid plastic material such as PET or PP. Trays are obtained which generally have side walls with thickness equal to or less than 1.5 mm, a depth up to 80 mm, with a slope of the side walls between 6° and 12° with respect to the vertical, preferably between 7° and 10°, and a density of the expanded portion (expanded polystyrene layer) between 120 and 160 grams/liter, preferably between 140 and 150 grams/liter, substantially corresponding to the density of the sheet before thermoforming.

The trays are then separated by means of punch cutting or other known cutting systems of.

In this manner, one obtains single trays 1, equipped with a certain thermal insulation capacity, ready to be stored and then sent to the site for making food packages in protective or modified atmosphere.

In accordance with a preferred embodiment, the tray according to the present invention has disengagement teeth 6 elements on the external wall of the side walls. Such teeth are made near the upper edge and are shaped in a manner so as to be in abutment against the edge of a further underlying tray, when these trays are stacked (Fig. 3). Naturally, the number, arrangement and shape of the disengagement teeth can be selected as desired.

In accordance with a further preferred embodiment, the upper edge 4 of the tray has, along its outer perimeter, an annular appendage 7 turned downwards in a manner so as to form an annular recess 5, which surrounds the external side wall, in the same manner with which the trays in non-expanded material are usually formed. In this manner it is possible to insert the tray in a suitable welding template, commonly present in packaging machines.

If a tray is made which has both the appendage 7 which forms the annular recess 5, and the disengagement teeth 6, the latter are positioned and shaped so as to prevent the appendages of two superimposed trays from interfering with each other. In practice, the lower base of the tooth, which is placed in abutment against the edge of the stacked tray, comes to be placed in a manner so as to prevent the free end of the appendage 7 from abutting against the edge of the underlying tray, as is visible in figure 3.

In production sites the aforesaid package is completed according to known operations, which essentially comprise arranging a food product inside a tray 1, then welding a further plastic film with barrier properties (plastic closure film) on the perimeter edge 4 of the tray 1.

In detail, such further plastic film with barrier properties is welded, along a peripheral band, to the plastic film having barrier properties which is coupled to the shock-resistant polystyrene layer. Such welding occurs at the perimeter edge 4 of the tray, in such a manner that a predetermined protective or modified atmosphere is trapped between the two plastic films having barrier properties.

Advantageously, the presence of the overturned edge facilitates this welding operation of the further plastic film by means of conventional machines, usually used for the trays made of rigid plastic material.

The protective or modified atmosphere is constituted by a pre-established gas preferably selected from the group comprising nitrogen, argon, oxygen, helium, carbon dioxide and mixtures thereof.

The protective or modified atmosphere is trapped in the package according to the invention in a known manner, e.g. by means of at least partial extraction, before the welding of the two plastic films, of the air comprised between them. This is followed by an introduction of the pre-established gas or gas mixture, still in the space comprised between the aforesaid films.

In this case, one speaks of vacuum/gas procedure or method, in which the modified atmosphere is achieved via vacuum by means of conventional apparatuses.

Alternatively, the air is only substituted via expulsion by means of insufflation of the pre-established gas or gas mixture, in a so-called "gas washing" method.

In the latter case, the pre-established gas or gas mixture is insufflated between the first and second film arranged one on top of the other.

The insufflated gas expels the air present between the two plastic films, in turn occupying the space comprised between them, and subsequently remaining trapped in the sealed package when the plastic films are welded together.

The invention is now illustrated in greater detail by means of a non-limiting example, in which the production of a sheet of plastic material is described along with a tray obtained from such sheet in accordance with the invention.

### Example

A mixture constituted by a granular crystal polystyrene resin of Styron™ 686E type sold by Dow Plastics added with nucleants of Luzenac Extra A Superventilato (talc) type in a percentage equal to 0.6% by weight of the total resin, was fed to a mono-screw tandem extruder comprising a first roll with diameter of 120 mm and a second roll with diameter of 150 mm, having a capacity of 400 kg/h.

The mixture was plasticized in an extruder portion maintained at 190-210°C, then a mixture of n-butane, iso-butane, propane of the BS20 CBI type by Synthesis Chimica was added as expanding gas to the plasticized polymer, in a quantity equal to 2% of the total resin.

The polymer with the added expanding gas was then cooled in the secondary roll to a temperature of about 125°C and extruded through a die with a circular crown outlet with an average diameter of 130 mm, obtaining a sheet layer of expanded extruded polystyrene having a tubular shape.

The tubular sheet layer of expanded extruded polystyrene was mounted and cooled on a cylindrical gauge mandrel maintained at about 10°C and having a diameter of 415 mm, i.e. equal to 3.2 times the average diameter of the circular rim die; then, after having been cut longitudinally, it was coupled via a calender to a layer of shock-resistant polystyrene of DOW A-Tech 1200 type having a thickness of 150 microns and a plastic film with barrier properties with respect to gases having a thickness of 60 microns.

In this manner a sheet of plastic material was obtained in accordance with the present invention, comprising a layer of expanded extruded polystyrene coupled with a layer of shock-resistant polystyrene, the latter coupled to a flexible plastic film with barrier properties with respect to the gases, in which the expanded portion of the plastic material sheet, i.e. the expanded extruded polystyrene layer, has a density equal to 140 grams/liter and a thickness equal to 1.3 mm.

The sheet of plastic material thus obtained was fed to a thermoforming device equipped with preheating oven maintained at about 160°C, and was then shaped in a calibrated mold for a thickness corresponding to that of the sheet, maintained at a temperature of 20°C for a time of 1.5 seconds, obtaining trays in accordance to the invention having a density of the expanded polystyrene layer equal to 140 grams/liter, an average thickness of the walls of about 1.5 mm and a depth of 50 mm.

The complete thermoforming cycle time takes about 2.5 seconds.

The aforesaid trays were also obtained with uniform thickness and with the possibility of being able to impart reinforcement ribs as well as writing on the bottom, representing among other things also business trademarks or information for the consumer.

In addition, it was possible to obtain trays that are colored in a uniform manner, and with perfect and lasting adherence of the film coupled to the shock-resistant polystyrene layer.

The trays thus obtained, arranged in rows, showed an extremely reduced bulk with respect to conventional trays of equal size made of expanded polystyrene according to the prior art.

In addition, it was verified that the mechanical strength of the aforesaid trays also resulted greater than that ensured by any conventional expanded polystyrene tray of equal size according to the prior art, facilitating both the packaging operations and all subsequent handling to which such trays are subjected.

Unstacking tests were also carried out on automatic unstackers; these tests showed an optimal functioning of the packaging machines commonly present on the market.

A first advantage attained by the present invention consists of arranging trays essentially constituted by expanded plastic material, suitable for packaging a food product in protective or modified atmosphere, which when stacked in vertical rows have a bulk of about half that of trays essentially constituted by expanded plastic material provided by the prior art, and corresponding to about 10% more than the bulk of the non-expanded rigid plastic material trays.

A second advantage is constituted by the uniformity of the thickness, which allows a stacking/unstacking precision typical of trays made of non-expanded plastic material.

Such order and precision in stacking make the trays according to the invention also particularly suitable for unstacking on automatic systems, unlike the conventional trays containing expanded plastic material made according to the prior art.

With regard to rigidity, the rigidity shown by the trays according to the invention is comparable to that of conventional trays made of non-expanded plastic material.

In addition, the thermal insulation that the trays according to the present invention are able to ensure is decidedly greater than that of the conventional trays containing non-expanded plastic material.

Furthermore, a tray in accordance with the present invention allows the well-delineated forming of ribs, as well as small details which are sometimes situated on a package for a food product, such as writing and trademarks which often constitute a guarantee for the consumer.

Additionally, for the production of the trays according to the present invention, it is advantageously possible to employ the same thermoforming molds which are employed in the production of the trays made of non-expanded plastic material of known type.

Therefore, the present invention attains all the above-described advantages, without having to make new equipment which could have a negative impact on the costs.

It is intended that with regard to the invention described above in various embodiments comprising a sheet of plastic material, a tray for a food product obtained from such a sheet, a package in protective or modified atmosphere for a food comprising one such tray and with regard to the relative production methods, a person skilled in the art could make numerous modifications in order to meet particular and contingent needs, all of which, however, fall within the scope of protection of the invention as defined by the following claims.

## Claims

1. Sheet of multilayer plastic material comprising in succession a first layer of expanded extruded polystyrene, a second layer of high impact polystyrene having shock-resistant properties, a flexible plastic film having barrier properties with respect to gases, directly coupled to said second layer, **characterized in that** said first expanded extruded polystyrene layer has a density between 120 and 160 grams/liter, the final sheet having a substantially uniform thickness, equal to or less than 1.5 mm.

2. Sheet according to claim 1, wherein the density of the first layer is between 140 and 150 grams/liter.

3. Sheet according to claim 1 or 2, wherein the ratio between the thickness of the first layer and the overall thickness of the sheet is at least equal to 0.85.

4. Sheet according to any one of the preceding claims, wherein the thickness of the second layer is equal to about 150 microns.

5. Method for producing a sheet of multilayer plastic material according to any one of the claims 1 - 4, wherein said method comprises the steps of:
- feeding a polystyrene-based mixture to an extruder;
- melting said mixture;
- adding a blowing agent to said melted mixture;
- extruding said mixture through a die having outlet opening with circular rim form, obtaining a first layer of expanded extruded polystyrene in tubular form;
- fitting and cooling said first tubular layer exiting from the extruder on a cylindrical mandrel, wherein the ratio between the diameter of said mandrel and the average diameter of said circular rim is comprised between 3.0 and 3.5;
- cutting said first tubular layer along a generatrix in order to obtain a flat layer of expanded extruded polystyrene;
- coupling by means of a calender said first flat layer of expanded extruded polystyrene to a second layer of high impact polystyrene with shock-resistant properties and, atop this second layer, coupling a flexible plastic film with barrier properties with respect to gases, the resulting sheet of multilayer plastic material having a thickness equal to or less than 1.5 mm.

6. Tray for packaging food products, **characterized in that** it is obtained via thermoforming of a plastic material sheet according to any one of the claims 1 - 4, the first layer being placed on the external side of the tray.

7. Tray according to claim 6, **characterized in that** it comprises a layer of expanded extruded polystyrene having a density between 120 and 160 grams/liter.

8. Tray according to claim 6 or 7, wherein said density is between 140 and 150 grams/liter.

9. Tray according to any one of the claims 6-8, **characterized in that** it has side walls with a thickness equal to or less than 1.5 mm.

10. Tray according to claim 9, **characterized in that** said side walls have a slope with respect to the vertical between 6° and 12°.

11. Tray according to claim 10, **characterized in that** projecting disengagement teeth are obtained on the external side wall.

12. Tray according to claim 10, **characterized in that** the upper edge has an appendage placed in a manner so as to form an annular recess which surrounds the external side wall.

13. Tray according to any one of the claims 6-12, **characterized in that** it has a conformation such to comprise, at least on its sides, ribs intended to increase its mechanical strength.

14. Method for producing a tray for packaging food products according to any one of the claims 6 - 13, wherein said method comprises the steps of:
- feeding a polystyrene-based mixture to an extruder;
- melting said mixture;
- adding a blowing agent to said melted mixture;
- extruding said mixture through a die having outlet opening with circular rim form, obtaining a first layer of expanded extruded polystyrene in tubular form;
- fitting and cooling said first tubular layer exiting from the extruder on a cylindrical mandrel, wherein the ratio between the diameter of said mandrel and the average diameter of said circular rim is comprised between 3.0 and 3.5;
- cutting said first tubular layer along a generatrix in order to obtain a flat layer of expanded extruded polystyrene;
- coupling by means of calender said first flat layer of expanded extruded polystyrene to a second layer of shock-resistant polystyrene and, atop this second layer, coupling a flexible plastic film with barrier properties with respect to gases, so as to make a sheet of multilayer plastic material having a thickness equal to or less than 1.5 mm.
- molding the tray of the desired shape by subjecting the sheet to a mold with embossing punch operating on the side where the first layer is arranged, in a manner such that the latter comes to be placed on the inner side of the tray.

15. Package in protective or modified atmosphere for a food product comprising a tray according to any one of the claims 6 - 13, a food product arranged in said tray, a flexible plastic closure film having barrier properties sealed along a peripheral band of said tray and a pre-established gas or gas mixture trapped between said tray and said plastic closure film.

## Patentansprüche

1. Mehrschichtige Folie aus Kunststoff, umfassend aufeinanderfolgend eine erste Schicht aus expandiertem und extrudiertem Polystyrol, eine zweite Schicht aus schlagfestem Polystyrol mit stoßfesten Eigenschaften, eine flexible Kunststoffschicht mit Barriere-Eigenschaften gegenüber Gasen, wobei diese direkt an die zweite Schicht gekoppelt ist, **dadurch gekennzeichnet, dass** die erste expandierte und extrudierte Polystyrolschicht eine Dichte zwischen 120 und 160 g/l aufweist, wobei die resultierende Schicht eine im wesentlichen gleichmäßige Dicke von 1,5 mm oder weniger aufweist.

2. Folie gemäß Anspruch 1, wobei die erste Schicht eine Dichte zwischen 140 und 150 g/l aufweist.

3. Folie gemäß Anspruch 1 oder 2, wobei das Verhältnis zwischen der Dicke der ersten Schicht und der Gesamtdicke der Folie mindestens 0,85 ist.

4. Folie nach einem der vorhergehenden Ansprüche, wobei die Dicke der zweiten Schicht in etwa 150 µm ist.

5. Verfahren zur Herstellung einer mehrschichtigen Folie aus Kunststoff nach einem der Ansprüche 1 bis 4, wobei das Verfahren die Schritte umfasst:
- Zuführen einer auf Polystyrol basierenden Mischung zu einem Extruder;
- Schmelzen des Gemisches;
- Zugabe eines Treibmittels zu der geschmolzenen Mischung;
- Extrudieren der Mischung durch eine Düse, die eine Auslaßöffnung mit kreisförmiger Randform aufweist, wobei eine erste Schicht aus expandiertem und extrudiertem Polystyrol in Röhrenform erhalten wird;
- Anpassung und Kühlen der ersten rohrförmigen Schicht, die aus dem Extruder auf einem zylindrischen Dorn austritt, wobei das Verhältnis zwischen dem Durchmesser des Dorns und dem mittleren Durchmesser des kreisförmigen Randes zwischen 3,0 und 3,5 liegt;
- Schneiden der ersten rohrförmigen Schicht entlang einer Mantellinie, um eine flache Schicht aus expandiertem und extrudiertem Polystyrol zu erhalten;
- Koppeln der ersten flachen Schicht aus expandiertem und extrudiertem Polystyrol mit einer zweiten Schicht aus schlagfestem Polystyrol mit stoßfesten Eigenschaften mittels eines Kalanders und Koppeln einer flexiblen Kunststoffschicht mit Barriere-Eigenschaften gegenüber Gasen mit dieser zweiten Schicht, wobei die resultierende Folie aus mehrschichtigem Kunststoff eine Dicke von 1,5 mm oder weniger aufweist.

6. Schale zum Verpacken von Lebensmitteln, **dadurch gekennzeichnet, dass** sie durch Thermoformen einer Kunststoffmaterialfolie gemäß einem der Ansprüche 1 bis 4 hergestellt ist, wobei die erste Schicht auf der Außenseite der Schale angeordnet ist.

7. Schale gemäß Anspruch 6, **dadurch gekennzeichnet, dass** sie eine Schicht aus expandiertem und extrudiertem Polystyrol aufweist, die eine Dichte zwischen 120 und 160 g/l aufweist.

8. Schale gemäß Anspruch 6 oder 7, wobei die besagte Dichte zwischen 140 und 150 g/l beträgt.

9. Schale gemäß einem der Ansprüche 6 bis 8, **dadurch gekennzeichnet, dass** sie Seitenwände hat, die eine Dicke von 1,5 mm oder weniger aufweisen.

10. Schale gemäß Anspruch 9, **dadurch gekennzeichnet, dass** die Seitenwände eine Neigung zwischen 6° und 12° bezüglich der Vertikalen aufweisen.

11. Schale gemäß Anspruch 10, **dadurch gekennzeichnet, dass** herausragende Entkoppelungszähne auf der äußeren Seitenwand angebracht sind.

12. Schale gemäß Anspruch 10, **dadurch gekennzeichnet, dass** der obere Rand einen Fortsatz aufweist, der in einer derartigen Weise angeordnet ist, so dass eine ringförmige Aussparung gebildet wird, die die äußere Seitenwand umgibt.

13. Schale gemäß einem der Ansprüche 6 bis 12, **dadurch gekennzeichnet, dass** sie so ausgebildet ist, so dass sie zumindest an ihren Seiten Rippen aufweist, die dafür vorgesehen sind, ihre mechanische Festigkeit zu erhöhen.

14. Verfahren zur Herstellung einer Schale zum Verpacken von Lebensmitteln gemäß einem der Ansprüche 1 bis 4, wobei das Verfahren die Schritte umfasst:
- Zuführen einer auf Polystyrol basierenden Mischung zu einem Extruder;
- Schmelzen des Gemisches;
- Zugabe eines Treibmittels zu der geschmolzenen Mischung;
- Extrudieren der Mischung durch eine Düse, die eine Auslassöffnung mit kreisförmiger Randform aufweist, wobei eine erste Schicht aus expandiertem und extrudiertem Polystyrol in Röhrenform erhalten wird;
- Anpassung und Kühlen der ersten rohrförmigen Schicht, die aus dem Extruder auf einem zylindrischen Dorn austritt, wobei das Verhältnis zwischen dem Durchmesser des Dorns und dem mittleren Durchmesser des kreisförmigen Randes zwischen 3,0 und 3,5 liegt;
- Schneiden der ersten rohrförmigen Schicht entlang einer Mantellinie, um eine flache Schicht aus expandiertem und extrudiertem Polystyrol zu erhalten;
- Koppeln der ersten flachen Schicht aus expandiertem und extrudiertem Polystyrol mit einer zweiten Schicht aus schlagfestem Polystyrol mit stoßfesten Eigenschaften mittels eines Kalanders und Koppeln einer flexiblen Kunststoffschicht mit Barriere-Eigenschaften gegenüber Gasen mit dieser zweiten Schicht, wobei die resultierende Folie aus mehrschichtigem Kunststoff eine Dicke von 1,5 mm oder weniger aufweist.
- Formen des Behälters in die gewünschte Form, indem die Folie in eine Form gepresst wird, wobei der Prägestempel auf der Seite, an der die erste Schicht angeordnet ist, aufgebracht wird, so dass die Letztere auf der Innenseite des Behälters angeordnet ist.

15. Verpackung für ein Lebensmittelprodukt in schützender oder modifizierter Atmosphäre, umfassend eine Schale nach einem der Ansprüche 6 bis 13, ein Nahrungsmittelprodukt, das in der Schale angeordnet ist, eine flexible Kunststoffverschlussfolie mit Barriere-Eigenschaften, die entlang einer peripheren Kante der Schale abdichtet und wobei ein vorab eingebrachtes Gas oder Gasgemisch zwischen der Schale und der Kunststoffverschlussfolie eingeschlossen ist.

## Revendications

1. Feuille de matière plastique multicouche comprenant, successivement, une première couche en polystyrène extrudé expansé, une deuxième couche en polystyrène choc ayant des propriétés de résistance au choc, un film plastique flexible ayant des propriétés de barrière vis-à-vis des gaz, directement couplé à ladite deuxième couche, **caractérisée en ce que** ladite première couche en polystyrène extrudé expansé a une masse volumique comprise entre 120 et 160 grammes/litre, la feuille finale ayant une épaisseur pratiquement uniforme, égale ou inférieure à 1,5 mm.

2. Feuille selon la revendication 1, dans laquelle la masse volumique de la première couche est comprise entre 140 et 150 grammes/litre.

3. Feuille selon la revendication 1 ou 2, dans laquelle le rapport entre l'épaisseur de la première couche et l'épaisseur globale de la feuille est au moins égal à 0,85.

4. Feuille selon l'une quelconque des revendications précédentes, dans laquelle l'épaisseur de la deuxième couche est égale à environ 150 micromètres.

5. Procédé pour produire une feuille de matière plastique multicouche selon l'une quelconque des revendications 1 à 4, ledit procédé comprenant les étapes consistant, à :
- alimenter une extrudeuse avec un mélange à base de polystyrène ;
- fondre ledit mélange ;
- ajouter un agent porogène audit mélange fondu ;
- extruder ledit mélange à travers une filière ayant une ouverture de sortie en forme de couronne circulaire, pour obtenir une première couche en polystyrène extrudé expansé de forme tubulaire ;
- fixer et refroidir ladite première couche tubulaire sortant de l'extrudeuse sur un mandrin cylindrique, le rapport entre le diamètre dudit mandrin et le diamètre moyen de ladite couronne circulaire étant compris entre 3,0 et 3,5 ;
- découper ladite première couche tubulaire le long d'une génératrice afin d'obtenir une couche plate en polystyrène extrudé expansé ;
- coupler, au moyen d'une calandre, ladite première couche plate en polystyrène extrudé expansé à une deuxième couche en polystyrène choc ayant des propriétés de résistance au choc et, au-dessus de cette deuxième couche, coupler un film plastique flexible ayant des propriétés de barrière vis-à-vis des gaz, la feuille résultante de matière plastique multicouche ayant une épaisseur égale ou inférieure à 1,5 mm.

6. Plateau pour le conditionnement de produits alimentaires, **caractérisé en ce qu'**il est obtenu par thermoformage d'une feuille de matière plastique selon l'une quelconque des revendications 1 à 4, la première couche étant placée sur le côté externe du plateau.

7. Plateau selon la revendication 6, caractérisé en cc qu'il comprend une couche en polystyrène extrudé expansé ayant une masse volumique comprise entre 120 et 160 grammes/litre.

8. Plateau selon la revendication 6 ou 7, dans lequel ladite masse volumique est comprise entre 140 et 150 grammes/litre.

9. Plateau selon l'une quelconque des revendications 6 à 8, **caractérisé en ce qu'**il a des parois latérales ayant une épaisseur égale ou inférieure à 1,5 mm.

10. Plateau selon la revendication 9, **caractérisé en ce que** lesdites parois latérales ont une pente par rapport à la verticale comprise entre 6° et 12°.

11. Plateau selon la revendication 10, **caractérise en ce que** des dents de désengagement saillantes sont obtenues sur la paroi latérale externe.

12. Plateau selon la revendication 10, **caractérisé en ce que** le bord supérieur a un appendice placé de manière à former un évidement annulaire qui entoure la paroi latérale externe.

13. Plateau selon l'une quelconque des revendications 6 à 12, **caractérisé en ce qu'**il a une conformation telle qu'il comprend, au moins sur ses côtés, des nervures destinées à augmenter sa résistance mécanique.

14. Procédé pour produire un plateau pour le conditionnement de produits alimentaires selon l'une quelconque des revendications 6 à 13, ledit procédé comprenant les étapes consistant à :
- alimenter une extrudeuse avec un mélange à base de polystyrène ;
- fondre ledit mélange ;
- ajouter un agent d'expansion audit mélange fondu ;
- extruder ledit mélange à travers une filière ayant une ouverture de sortie en forme de couronne circulaire, pour obtenir une première couche en polystyrène extrudé expansé de forme tubulaire ;
- fixer et refroidir ladite première couche tubulaire sortant de l'extrudeuse sur un mandrin cylindrique, le rapport entre le diamètre dudit mandrin et le diamètre moyen de ladite couronne circulaire étant compris entre 3,0 et 3,5 ;
- découper ladite première couche tubulaire le long d'une génératrice afin d'obtenir une couche plate en polystyrène extrudé expansé ;
- coupler, au moyen d'une calandre, ladite première couche plate en polystyrène extrudé expansé à une deuxième couche en polystyrène choc et, au-dessus de cette deuxième couche, coupler un film plastique flexible ayant des propriétés de barrière vis-à-vis des gaz, de façon à produire une feuille de matière plastique multicouche ayant une épaisseur égale ou inférieure à 1,5 mm ;
- mouler le plateau à la forme souhaitée en soumettant la feuille à un moule avec un poinçon d'emboutissage opérant sur le côté où se trouve la première couche, de telle manière que cette dernière devienne placée sur le côté intérieur du plateau.

15. Conditionnement sous atmosphère protectrice ou modifiée pour un produit alimentaire comprenant un plateau selon l'une quelconque des revendications 6 à 13, un produit alimentaire disposé dans ledit plateau, un film de fermeture en plastique flexible ayant des propriétés de barrière, scellé le long d'une bande périphérique dudit plateau, et un gaz ou mélange gazeux préétabli piégé entre ledit plateau et ledit film de fermeture en plastique.
